# EUROPEAN PATENT SPECIFICATION

(11) **EP 3 772 292 B1**
(45) Date of publication and mention of the grant of the patent: **12.07.2023**
(21) Application number: 20189378.1
(22) Date of filing: 04.08.2020
(51) Int. Cl.: A43B 1/04, A43B 5/04, A43B 13/02, A43B 17/02, A43B 17/14, A43B 17/18, B29D 35/14

(54) **REMOVABLE WEDGE FOR SKI BOOTS AND SKI BOOT PROVIDED WITH SUCH WEDGE**
ABNEHMBARER KEIL FÜR SKISCHUHE UND SKISCHUH MIT SOLCH EINEM KEIL
COIN AMOVIBLE POUR CHAUSSURES DE SKI ET CHAUSSURE DE SKI ÉQUIPÉ D'UN TEL COIN

(30) Priority: 06.08.2019 IT 201900014124
(43) Date of publication of application: 10.02.2021
(73) Proprietor: Calzaturificio S.C.A.R.P.A. S.p.A., 31011 Asolo (IT)
(72) Inventor: PARISOTTO, Davide, 31010 Casella d'Asolo (TV) (IT)
(74) Representative: Bellemo, Matteo

(56) References cited:
- DE-A1-102010 008 627
- US-A1- 2011 041 358
- US-A1- 2011 283 560

## Description

### TECHNICAL FIELD

The present invention relates to a removable wedge for ski boots and to a ski boot provided with such wedge.

More in detail, the present invention relates to a removable wedge for ski mountaineering boots. Use to which the following disclosure will explicitly refer without losing generality.

### BACKGROUND ART

As is known, ski mountaineering boots traditionally comprise: a substantially shoe-shaped, rigid foot-casing which is structured so as to accommodate and protect the user's foot, and has the lower part specifically structured to be fixed on the back of the downhill ski or similar equipment by means of a special ski mountaineering binding device; a rigid cuff which is shaped so as to embrace the lower part of the user's leg from behind, and is hinged to the upper part of the foot-casing so as to be able to rotate about a transversal reference axis, which is substantially perpendicular to the vertical midplane of the boot, and is also substantially coincident with the articulation axis of the ankle; and a protective boot-liner in soft and thermal-insulating material, which is inserted in removable manner into the foot-casing and the cuff, and is shaped so as to accommodate and protect the foot and the lower part of the user's leg roughly up to the calf.

The aforementioned ski mountaineering boots are also provided with a foot-casing closing mechanism and a cuff closing mechanism, both manually operated.

Over the last few years, some studies on the kinematics of the athlete's movement while practicing ski mountaineering have shown that the thrust transmitted by the athlete to the ski increases as the forward pitch/slope of the support surface of the user's foot inside of the ski mountaineering boot, or rather inside the protective boot-liner, increases.

Unfortunately, the greater pitch/slope of the support surface of the foot inside the ski mountaineering boot somewhat reduces the comfort of the shoe, therefore the need for a greater slope of the support surface of the foot inside of the boot is only required sporadically and mainly during sports competitions.

In consideration of these studies, the need has therefore emerged to allow the user of ski mountaineering boots to be able to increase, at his/her discretion and by a few degrees with respect to the nominal value resulting from the geometry of the bottom of the foot-casing of the ski boot, the pitch/slope of the foot support surface inside of the ski mountaineering boot.

DE102010008627 A1 discloses an orthopedic shoe insert which is made of foamed polyurethane and incorporates a non-elastic textile, but it is unsuitable for ski boots because has an elastically deformable structure.

To meet this need, some manufacturers of ski mountaineering boots have put on the market plastic-material platelike wedges that are suitable for being firmly fixed on the bottom of the foot-casing, immediately underneath the protective boot-liner, so as to increase by a few degrees the slope of the support surface of the sole of the foot.

Unfortunately, while working very well, plastic wedges have shown some critical issues that have significantly limited the use thereof.

The additional wedge, in fact, increases the production cost and the overall weight of the ski mountaineering boot, therefore it must have an extremely light and cost-effective structure to produce.

Furthermore, to give the desired results, the additional wedge must be rigidly locked to the bottom of the foot-casing, with all the problems that this entails.

Experimental tests, in fact, have shown that fixing in position the wedges by means of one or more anchoring screws leads, in a short time, to a fatigue cracking of the wedge.

The use of double-sided tape, on the other hand, was quickly abandoned because it does not offer an adequate guarantee of tightness over time, due to the reduced adhesion capacity of the tape on the lower face of the wedge and/or on the bottom of the foot-casing due to the particular plastic materials used.

Finally, the use of glues to be interposed between the wedge and the bottom of the foot-casing is impractical because it makes the wedge unremovable.

### DISCLOSURE OF INVENTION

Aim of the present invention is to provide a removable wedge for ski boots which can obviate the drawbacks indicated above.

In compliance with these aims, according to the present invention there is provided a removable wedge for ski boots as defined in Claim 1 and preferably, though not necessarily, in any of the claims dependent on it.

Moreover according to the present invention there is provided a ski boot as defined in Claim 11.

### BRIEF DESCRIPTION OF THE DRAWINGS

The present invention will now be described with reference to the accompanying drawings, which show a nonlimiting example thereof, in which:
- Figure 1 is a lateral view, with parts in section and parts removed for clarity, of a ski boot provided with a removable wedge realized according to the teachings of the present invention;
- Figure 2 is a perspective view of the removable wedge shown in Figure 1;
- Figure 3 is a sectional view of the removable wedge shown in Figure 2.

### BEST MODE FOR CARRYING OUT THE INVENTION

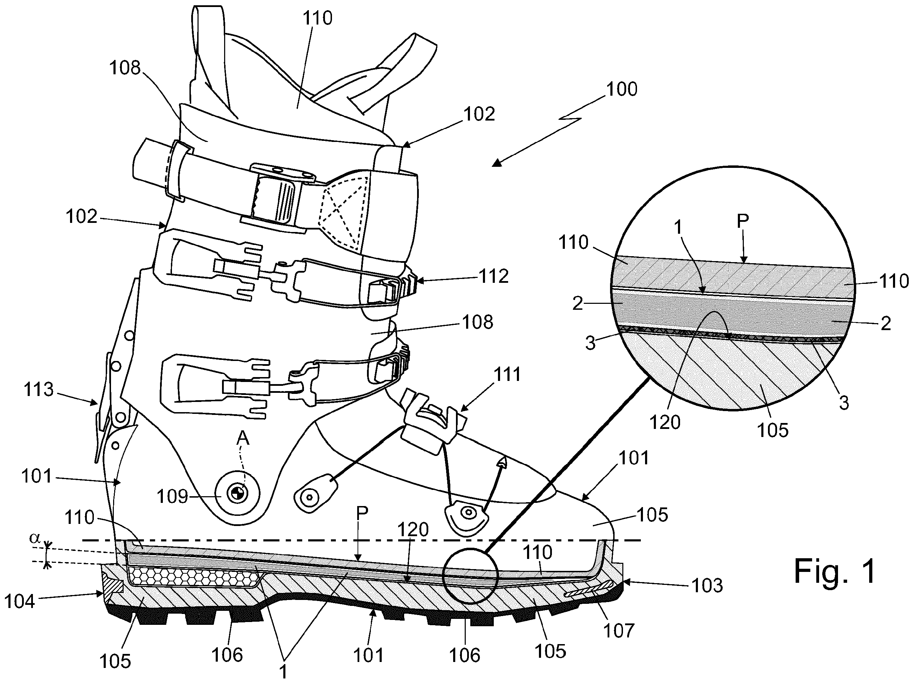

With reference to Figures 1, 2 and 3, number 1 denotes as a whole a removable wedge which is adapted to be fixed in a rigid and stable, though easily removable manner, inside a ski boot 100 that can advantageously be used for practicing ski mountaineering or telemark skiing.

More in detail, the removable wedge 1 is adapted to be fixed in a rigid and stable, though easily removable manner, inside a ski boot 100, resting on the bottom of the foot-casing of the boot, and is specifically structured/shaped to increase the forward pitch/slope of the support surface P of the user's foot, or rather of the sole of the user's foot, inside the ski boot 100, by a few degrees with respect to the nominal value resulting from the geometry of the bottom of the foot-casing of the ski boot 100.

In the example shown, in particular, the removable wedge 1 is preferably dimensioned to increase the forward pitch/ slope of the foot support surface P inside the ski boot 100 by a given angle α preferably, though not necessarily, ranging between 1° and 7°.

With reference to Figure 1, in particular the ski boot 100 comprises: a substantially rigid foot-casing 101, which is shaped substantially as a shoe, is adapted to accommodate the user's foot, and preferably has a lower part specifically structured/shaped to couple/fasten in a rigid and stable, though easily releasable manner, to a known-type ski binding device (not shown) that, in turn, is adapted to be rigidly secured to the back of a generic downhill ski or similar equipment; and a substantially rigid cuff 102 which is shaped so as to embrace the lower part of the user's leg and is pivotally joined to the foot-casing 101, so as to be able to freely rotate about a transversal reference axis A that is locally substantially perpendicular to the vertical midplane of the boot, and is also substantially coincident with the articulation axis of the user's ankle.

More in detail, the lower part of the foot-casing 101 is provided with a front tip 103 and a rear heel 104. The front tip 103 is preferably structured so as to be able to couple/fasten in a stable, though easily releasable manner, to the toe-piece (not shown) of a ski binding device which, in turn, is firmly fixed on the back of the downhill ski or the like. The rear heel 104, on the other hand, is preferably structured so as to be able to couple/fasten in a stable, though easily releasable manner, to the heel-piece (not shown) of the same ski binding device which, in turn, is firmly fixed on the back of the downhill ski or the like.

Even more in detail, the front tip 103 of foot-casing 101 is preferably structured so as to be able to couple/ fasten in known manner to the toe-piece of a ski mountaineering binding device; while the rear heel 104 of foot-casing 101 is preferably structured so as to be able to couple/ fasten in known manner to the heel-piece of the same ski mountaineering binding device.

Preferably, the lower part of foot-casing 101 moreover has a treaded profile so as to grip on snow and/or ice, and therefore allow the user to walk on snow and ice in relative safety.

In the example shown, in particular, the foot-casing 101 preferably comprises: a substantially rigid shell 105 shaped approximately like an oblong basin, which is preferably made of plastic and/or composite material, and is shaped so as to accommodate and enclose the user's foot, preferably roughly up to ankle; and optionally a lower sole 106 preferably with a treaded profile, which is preferably made of vulcanized rubber or other elastomeric material with a high coefficient of friction, and is firmly fixed on the bottom wall of shell 105 preferably by gluing.

In addition, the foot-casing 101 preferably also comprises a rigid insert 107 preferably made of metal material, which has a substantially platelike structure and is stably embedded/incorporated in the bottom wall of the shell 105 roughly at the tip 103 of foot-casing 101.

The rigid insert 107 is moreover dimensioned so as to surface/emerge outside the shell 105 from opposite sides of the front tip 103 of foot-casing 101, preferably in a substantially specular position with respect to the midplane of the boot, so that the two distal ends of the rigid insert 107 can couple in axially rotatable manner with the toe-piece of the ski mountaineering binding device.

With reference to Figure 1, on the other hand the cuff 102 preferably comprises a substantially rigid shell 108 preferably made of plastic and/or composite material, which is preferably substantially C-bent so as to cover the rear part of the user's leg, from the ankle substantially up to the calf, and is additionally provided with two oblong side flaps which extend forward on opposite sides of the midplane of the boot, so as to embrace from behind the user's leg roughly up to the calf, and preferably then overlap to one another at the front of the leg, thus forming a tubular structure that surrounds the user's leg at the calf height.

The cuff 102, in addition, is preferably fixed in free rotatable manner to the upper part of foot-casing 101, or better of shell 105, by means of two connecting hinges 109 preferably made of metal material, which are located on the inner and outer lateral sides of foot-casing 101 and of cuff 102, aligned along the transversal axis A, so as to allow the cuff 102 to swing freely on the foot-casing 101 forward and backward, while remaining always on a reference plane orthogonal to axis A and substantially coincident with the midplane of the boot.

With reference to Figure 1, in addition the ski boot 100 also comprises an inner protective boot-liner 110, preferably shaped substantially as a boot, which has a soft and thermal-insulating structure, is inserted in manually removable manner into the foot-casing 101 and the cuff 102, and is shaped so as to accommodate and protect the foot and preferably also the lower part of the user's leg.

Preferably, the boot-liner 110 moreover has a thermoformable structure.

In addition, the ski boot 100 is furthermore provided with a foot-casing closing mechanism 111 and/or a cuff closing mechanism 112, preferably both manually operated.

The foot-casing closing mechanism 111 is structured so as to be able to selectively close/tighten the upper part of the foot-casing 101 against the user's foot, thus to immobilize the user's foot inside the foot-casing 101, or rather inside the boot-liner 110.

The cuff closing mechanism 112, on the other hand, is structured so as to be able to selectively close/tighten the upper part of the cuff 102 against the user's leg, so as to immobilize the user's leg inside the cuff 102, or rather inside the boot-liner 110.

The foot-casing closing mechanism 111 and the cuff closing mechanism 112 are devices already widely known and used in the ski-boot field and therefore won't be further described.

With reference to Figure 1, preferably the ski boot 100 is finally provided with a manually-operated cuff locking device 113 which is structured so as to be able to selectively lock the cuff 102 to the foot-casing 101 in a predetermined descent position, in which the cuff 102 is inclined forward with respect to the vertical by a given angle preferably lower than 30°.

More in detail, the cuff locking device 113 is preferably fixed on the cuff 102 in the area above the heel of the boot, substantially straddling the midplane of the boot, and is structured so as to be able, on choice and alternatively, to
- connect the cuff 102 to the foot-casing 101 so as to lock the cuff 102 in said descent position; and
- completely unlock/release the cuff 102 from the foot-casing 101 so as to allow the cuff 102 to freely swing back and forth on the foot-casing 101 around the transversal axis A, while remaining on the midplane of the boot.

With reference to Figures 1, 2 and 3, the removable wedge 1 is therefore adapted to be interposed between the boot-liner 110, or rather the part of the boot-liner 110 that covers the sole of the user's foot, and the bottom 120 of foot-casing 101, or rather the bottom of the rigid shell 105, so as to increase by a few degrees the forward pitch/ slope of the support surface P of the sole of the user's foot located inside the boot-liner 110.

The removable wedge 1 moreover comprises: a platelike rigid body 2, which is made of plastic material and is preferably shaped as a foot-bed; and a piece of fabric 3 which is embedded in the platelike rigid body 2 so as to emerge over the lower face of the platelike rigid body 2, i.e. the face intended to rest on the bottom 120 of foot-casing 101, and is additionally provided, on the part that emerges outside of the platelike rigid body 2, with an adhesive layer 4 that is able to adhere to the bottom 120 of foot-casing 101.

More in detail, the platelike rigid body 2 is injection-moulded directly over the piece of fabric 3.

Preferably, the rigid platelike body 2 additionally has a monolithic structure with a variable thickness that decreases towards the tip.

More in detail, the rigid platelike body 2 is suitably shaped/dimensioned so as to increase the forward pitch/slope of the support surface P of the user's foot inside the ski boot 100, or rather inside the foot-casing 110, by a given angle with respect to the nominal value resulting from the geometry of the bottom 120 of foot-casing 101.

Preferably, the piece of fabric 3 additionally covers without interruption substantially the entire lower face of the platelike rigid body 2 .

In addition, the removable wedge 1 is preferably also provided with a protective film (not visible in the figures) preferably made of polymeric material, which is attached in easily removable manner onto the piece of fabric 3 to cover and protect the entire adhesive layer 4.

In the example shown, in particular, the platelike rigid body 2 preferably has a shape roughly complementary to that of the bottom 120 of foot-casing 101 on which the removable wedge 1 has be placed, so as to cover the bottom 120 of foot-casing 101 substantially for the entire extension thereof.

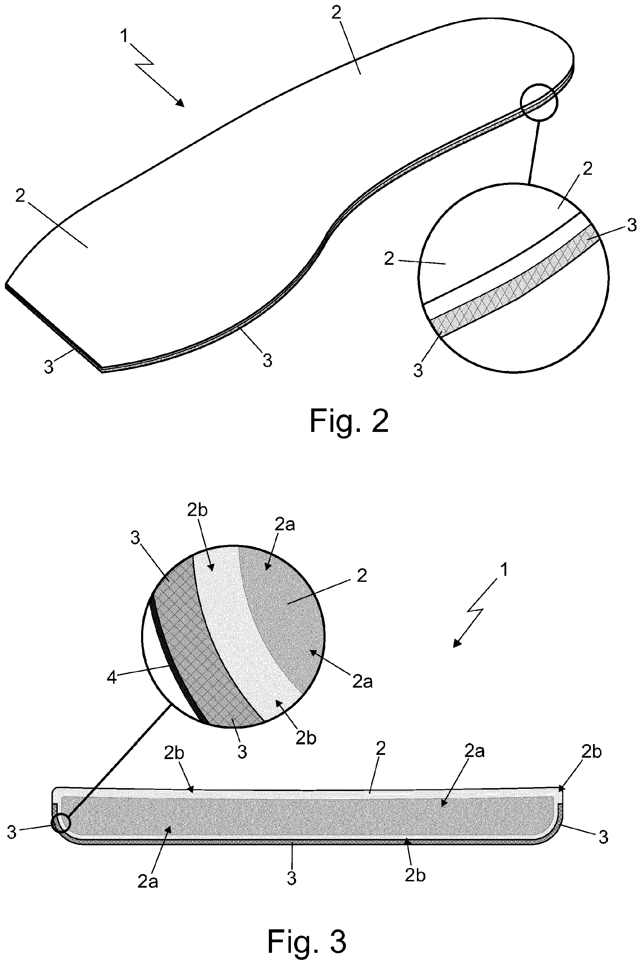

With reference to Figure 2, preferably the platelike rigid body 2 additionally has a variable-density structure.

More in detail, the platelike rigid body 2 preferably has an expanded central core 2a and a surface layer 2b, also referred to as skin, which is smoother and more compact than the central core 2a and surrounds the central core 2a preferably substantially without interruptions. Preferably, the surface layer 2b additionally has a hardness and/or a density greater than that/those of the central core 2a, and optionally a thickness of less than 1 mm (millimeter).

Preferably, the piece of fabric 3 is moreover embedded solely in the surface layer 2b of the platelike rigid body 2. In other words, the thickness of the surface layer 2b of the platelike rigid body 2 is preferably greater than the thickness of the piece of fabric 3.

Preferably, the platelike rigid body 2 is finally made of an expanded polymeric material with open cells.

In the example shown, in particular, the platelike rigid body 2 is preferably made of high-density expanded polyurethane, preferably polyether-based.

More in detail, the platelike rigid body 2 is preferably made of an expanded polyurethane obtained starting from isocyanate and polyether monomers.

Preferably, the average/nominal density of the expanded polymeric material, or rather of the expanded polyurethane, is greater than 100 Kg/m3 (kilograms per cubic meter) and more conveniently ranges between 500 and 950 Kg/m3 (kilograms per cubic meter).

Operation of ski boot 100 and of removable wedge 1 is easily inferable from what written above and does not require further explanations.

The advantages connected to the particular structure of the removable wedge 1 are remarkable.

Firstly, the injection-moulding of the platelike rigid body 2 over the piece of fabric 3 allows to mechanically fix the fabric 3 onto the platelike rigid body 2 in a firmer and more tenacious manner than any adhesive, thus allowing the chemical composition of the adhesive layer 4 to be optimized for optimal adhesion solely to the foot-casing 101 of the ski boot 1, or rather to the shell 105.

In addition, the variable-density structure of the platelike rigid body 2 allows the overall weight of the removable wedge 1 to be contained, without thereby affecting the hardness and twisting and/or bending resistance of the piece.

It is finally clear that modifications and variations may be made to the ski boot 100 and to the removable wedge 1 described above without thereby departing from the scope of the present invention.

For example, instead of being injection-molded directly over the piece of fabric 3, the platelike rigid body 2 may be obtained by pouring the plastic material into a mould that copies in negative the shape of the platelike rigid body 2 and already accommodates the piece of fabric 3.

In other words, the platelike rigid body 2 may be made by cast moulding.

Furthermore, the platelike rigid body 2 may be also made of polyoxymethylene (POM), of polyether block amide (PEBA), of high-density polyamide or polyethylene.

Finally, the platelike rigid body 2 may also be made of two or more polymeric materials, which differ from each other in polymeric composition and/or density and/or hardness and/or elastic modulus.

More in detail, the central core of the platelike rigid body may be made of a first expanded or non-expanded polymeric material, while the surface layer may be made of a second polymeric material having a polymeric composition different from that of the first polymeric material, and preferably having a density and/or a hardness and/or an elastic modulus greater than those of the first polymeric material.

## Claims

1. A removable wedge (1) for ski boots, which is adapted to be fixed in removable manner inside a ski boot (100), resting on the bottom (120) of the foot-casing (101) of the ski boot (100), wherein the removable wedge (1) comprises:
a platelike rigid body (2) made of plastic material, which has a variable-density structure and includes a central core (2a) and a surface layer (2b) that is smoother and more compact than the central core (2a) and surrounds said central core (2a) substantially without interruptions; and a piece of fabric (3) which is embedded in the platelike rigid body (2) in order to emerge over the lower face of the platelike rigid body (2), and additionally has an adhesive layer (4) on the part that emerges outside of said platelike rigid body (2); wherein said central core (2a) is an expanded central core (2a) or wherein the said central core (2a) is made of a first expanded or non-expanded polymeric material and the surface layer (2b) is made of a second polymeric material having a polymeric composition different from that of the first polymeric material.

2. Removable wedge according to Claim 1, wherein the platelike rigid body (2) is injection-moulded or is cast moulded, directly over said piece of fabric (3).

3. Removable wedge according to Claim 1 or 2, wherein the platelike rigid body (2) has a monolithic structure with a thickness decreasing towards the tip.

4. Removable wedge according to Claim 1, 2 or 3, wherein the platelike rigid body (2) is shaped substantially as a foot-bed.

5. Removable wedge according to any one of the preceding claims, wherein the piece of fabric (3) covers substantially the entire lower face of said platelike rigid body (2).

6. Removable wedge according to any one of the preceding claims, wherein the surface layer (2b) of the platelike rigid body (2) has a hardness and/or a density greater than that/those of the central core (2a).

7. Removable wedge according to any one of the preceding claims, wherein the piece of fabric (3) is embedded only in the surface layer (2b) of the platelike rigid body (2).

8. Removable wedge according to any one of the preceding claims, **characterised in that** it additionally comprises a protective film attached in removable manner onto he piece of fabric (3) to cover and protect the adhesive layer (4).

9. Removable wedge according to any one of the preceding claims, wherein the platelike rigid body (2) is made of high-density polyurethane foam.

10. Removable wedge according to any one of Claims 1 to 8, wherein the platelike rigid body (2) is made of two or more polymeric materials that differ from each other in polymeric composition and/or density and/or hardness and/or elastic modulus.

11. A ski boot (100) comprising: a substantially rigid foot-casing (101) which is adapted to accommodate the user's foot and has the lower part structured so as to be able to fasten to a ski binding device; a substantially rigid cuff (102) which is adapted to surround the lower part of the users leg, and is pivotally joined onto the foot-casing (101) so as to be able to rotate around a reference axis (A) substantially perpendicular to the midplane of the boot; a protective inner boot-liner (110) which has a soft and thermal-insulating structure, is inserted in removable manner inside the foot-casing (101), and is shaped so as to be able to accommodate and protect at least the user's foot; and foot-casing closing means (111) and cuff closing means (112) adapted to close/tighten, respectively, the foot-casing (101) and the cuff (102);
wherein the ski boot (100) additionally comprises a removable wedge (1) which is adapted to be interposed between the boot-liner (110) and the bottom of the foot-casing (101), and is realized according to any one of Claims from 1 to 10.

12. Ski boot according to Claim 11, wherein the platelike rigid body (2) is shaped/dimensioned so as to increase the forward pitch/slope of the support surface (P) of the user's foot inside of the ski boot (100).

## Patentansprüche

1. Abnehmbarer Keil (1) für Skischuhe, der geeignet ist, in einem Skischuh (100) in abnehmbarer Weise befestigt zu werden, der auf der Unterseite (120) der Fußschale (101) des Skischuhs (100) liegt, wobei der abnehmbare Keil (1) umfasst:
einen plattenartigen starren Körper (2) aus einem Kunststoffmaterial, der eine Struktur mit variabler Dichte aufweist und einen zentralen Kern (2a) und eine Oberflächenschicht (2b) enthält, die glatter und kompakter ist als der zentrale Kern (2a) und diesen zentralen Kern (2a) im Wesentlichen ohne Unterbrechungen umgibt; und ein Gewebestück (3), das in den plattenartigen starren Körper (2) eingebettet ist, um über die untere Fläche des plattenartigen starren Körpers (2) herauszuragen, und zusätzlich eine Haftschicht (4) auf dem Teil aufweist, der aus dem plattenartigen starren Körper (2) herausragt; wobei dieser zentrale Kern (2a) ein expandierter zentraler Kern (2a) ist oder wobei dieser zentrale Kern (2a) aus einem expandierten zentralen Kern (2a) oder einem nicht-expandierten Kunststoffmaterial ist und die Oberflächenschicht (2b) aus einem zweiten Kunststoffmaterial ist, das eine Polymerzusammensetzung aufweist, die unterschiedlich von der des ersten Kunststoffmaterials ist.

2. Abnehmbarer Keil gemäß Anspruch 1, wobei der plattenartige starre Körper (2) direkt über dieses Gewebestück (3) spritzgegossen oder formgegossen wird.

3. Abnehmbarer Keil gemäß Anspruch 1 oder 2, wobei der plattenartige starre Körper (2) eine monolithische Struktur mit einer zur Spitze hin abnehmenden Dicke aufweist.

4. Abnehmbarer Keil gemäß Anspruch 1, 2 oder 3, wobei der plattenartige starre Körper (2) im Wesentlichen als ein Fußbett geformt ist.

5. Abnehmbarer Keil gemäß einem der vorhergehenden Ansprüche, wobei das Gewebestück (3) im Wesentlichen die gesamte untere Fläche dieses plattenartigen starren Körpers (2) bedeckt.

6. Abnehmbarer Keil gemäß einem der vorhergehenden Ansprüche, wobei die Oberflächenschicht (2b) des plattenartigen starren Körpers (2) eine Härte und/oder Dichte größer als die/diese des zentralen Kerns (2a) aufweist.

7. Abnehmbarer Keil gemäß einem der vorhergehenden Ansprüche, wobei das Gewebestück (3) nur in der Oberflächenschicht (2b) des plattenartigen starren Körpers (2) eingebettet ist.

8. Abnehmbarer Keil gemäß einem der vorhergehenden Ansprüche, **dadurch gekennzeichnet, dass** er zusätzlich eine Schutzfolie umfasst, die in abnehmbarer Weise auf dem Gewebestück (3) angebracht ist, um die Haftschicht (4) zu bedecken und zu schützen.

9. Abnehmbarer Keil gemäß einem der vorhergehenden Ansprüche, wobei der plattenartige starre Körper (2) aus hochdichtem Polyurethanschaum ist.

10. Abnehmbarer Keil gemäß einem der Ansprüche 1 bis 8, wobei der plattenartige starre Körper (2) aus zwei oder mehr Kunststoffmaterialien ist, die unterschiedlich voneinander in der Kunststoffzusammensetzung und/oder der Dichte und/oder der Härte und/oder dem Elastizitätsmodul sind.

11. Skischuh (100), umfassend: eine im Wesentlichen starre Fußschale (101), die geeignet ist, den Fuß des Benutzers aufzunehmen, und deren unterer Teil so strukturiert ist, um an einer Skibindungsvorrichtung befestigt werden zu können; eine im Wesentlichen starre Manschette (102), die geeignet ist, den unteren Teil des Beines des Benutzers zu umgeben, und die schwenkbar mit der Fußschale (101) verbunden ist, um um eine Bezugsachse (A) drehen zu können, die im Wesentlichen senkrecht zur Mittelebene des Schuhs verläuft; eine schützende innere Schuhauskleidung (110), die eine weiche und wärmeisolierende Struktur aufweist, die in abnehmbarer Weise in das Innere der Fußschale (101) eingesetzt ist und so geformt ist, um zumindest den Fuß des Benutzers aufnehmen und schützen zu können; und Fußschalenschließmittel (111) und Manschettenschließmittel (112), die geeignet sind, die Fußschale (101) bzw. die Manschette (102) zu schließen/festzuziehen;
wobei der Skischuh (100) zusätzlich einen abnehmbaren Keil (1) umfasst, der geeignet ist, zwischen der Schauhauskleidung (110) und dem Boden der Fußschale (101) eingefügt zu werden, und der nach einem der Ansprüche 1 bis 10 realisiert ist.

12. Skischuh gemäß Anspruch 11, wobei der plattenartige starre Körper (2) so geformt/dimensioniert ist, um die Vorwärtsneigung/Neigung der Auflagefläche (P) des Fußes des Benutzers im Skischuh (100) zu steigern.

## Revendications

1. Coin amovible (1) pour chaussures de ski, qui est adapté à être fixé d'une manière amovible à l'intérieur d'une chaussure de ski (100), reposant sur le fond (120) du logement de pied (101) de la chaussure de ski (100), dans lequel le coin amovible (1) comprend :
un corps rigide en forme de plaque (2) composé d'une matière plastique, qui présente une structure de densité variable et comporte un noyau central (2a) et une couche de surface (2b) qui est plus lisse et plus compacte que le noyau central (2a) et entoure ledit noyau central (2a) sensiblement sans interruption ; et une pièce de tissu (3) qui est intégrée dans le corps rigide en forme de plaque (2) afin d'émerger sur la face inférieure du corps rigide en forme de plaque (2), et présente en outre une couche adhésive (4) sur la partie qui émerge à l'extérieur dudit corps rigide en forme de plaque (2) ; dans lequel ledit noyau central (2a) est un noyau central (2a) expansé ou dans lequel ledit noyau central (2a) est composé d'un premier matériau polymère expansé ou non expansé et la couche de surface (2b) est composée d'un second matériau polymère présentant une composition polymère différente de celle du premier matériau polymère.

2. Coin amovible selon la revendication 1, dans lequel le corps rigide en forme de plaque (2) est moulé par injection ou est moulé par coulée, directement sur ladite pièce de tissu (3).

3. Coin amovible selon la revendication 1 ou 2, dans lequel le corps rigide en forme de plaque (2) présente une structure monolithique avec une épaisseur diminuant en direction de la pointe.

4. Coin amovible selon la revendication 1, 2 ou 3, dans lequel le corps rigide en forme de plaque (2) est formé sensiblement comme un repose-pieds.

5. Coin amovible selon l'une quelconque des revendications précédentes, dans lequel la pièce de tissu (3) couvre sensiblement toute la face inférieure dudit corps rigide en forme de plaque (2).

6. Coin amovible selon l'une quelconque des revendications précédentes, dans lequel la couche de surface (2b) du corps rigide en forme de plaque (2) présente une dureté et/ou une densité supérieure(s) à celle(s) du noyau central (2a).

7. Coin amovible selon l'une quelconque des revendications précédentes, dans lequel la pièce de tissu (3) est intégrée seulement dans la couche de surface (b) du corps rigide en forme de plaque (2).

8. Coin amovible selon l'une quelconque des revendications précédentes, **caractérisé en ce qu'**il comprend en outre un film protecteur fixé de manière amovible sur la pièce de tissu (3) pour couvrir et protéger la couche adhésive (4).

9. Coin amovible selon l'une quelconque des revendications précédentes, dans lequel le corps rigide en forme de plaque (2) est composé de mousse polyuréthane à haute densité.

10. Coin amovible selon l'une quelconque des revendications 1 à 8, dans lequel le corps rigide en forme de plaque (2) est composé de deux ou plus de deux matériaux polymères qui diffèrent l'un de l'autre en termes de composition polymère et/ou de densité et/ou de dureté et/ou de module élastique.

11. Chaussure de ski (100) comprenant : un logement de pied (101) sensiblement rigide qui est conçu pour recevoir le pied de l'utilisateur et dont la partie inférieure est structurée de manière à pouvoir se fixer à un dispositif de liaison de ski ; une manchette (102) sensiblement rigide qui est conçue pour entourer la partie inférieure des jambes de l'utilisateur, et est jointe de façon pivotante sur le logement de pied (101) de manière à pouvoir tourner autour d'un axe de référence (A) sensiblement perpendiculaire au plan médian de la chaussure ; une doublure de chaussure (110) interne de protection qui présente une structure souple thermiquement isolante, est insérée de manière amovible à l'intérieur du logement de pied (101), et est formée de manière à pouvoir recevoir et protéger au moins le pied de l'utilisateur ; et des moyens de fermeture de logement de pied (111) et des moyens de fermeture de manchette (112) conçus pour fermer/resserrer, respectivement, le logement de pied (101) et la manchette (102) ;
dans laquelle la chaussure de ski (100) comprend en outre un coin amovible (1) qui est conçu pour être interposé entre la doublure de chaussure (110) et le fond du logement de pied (101), et est réalisé selon l'une quelconque des revendications 1 à 10.

12. Chaussure de ski selon la revendication 11, dans laquelle le corps rigide en forme de plaque (2) est formé/dimensionné de manière à augmenter le pas/l'inclinaison vers l'avant de la surface de support (P) du pied de l'utilisateur à l'intérieur de la chaussure de ski (100).
